(19) **Europäisches Patentamt**

**European Patent Office**

**Office européen des brevets**

(11) **EP 0 468 312 B1**

(12) **EUROPÄISCHE PATENTSCHRIFT**

(45) Veröffentlichungstag und Bekanntmachung des Hinweises auf die Patenterteilung:
**07.11.2001   Patentblatt 2001/45**

(51) Int Cl.⁷: **C08F 220/06**, C08F 220/34, B41N 1/08

(21) Anmeldenummer: **91111642.4**

(22) Anmeldetag: **12.07.1991**

(54) **Offsetdruckplatte**

Offset-printing plate

Plaque d'impression pour impression offset

(84) Benannte Vertragsstaaten:
**DE GB NL**

(30) Priorität: **21.07.1990   DE 4023268**

(43) Veröffentlichungstag der Anmeldung:
**29.01.1992   Patentblatt 1992/05**

(73) Patentinhaber: **Agfa-Gevaert**
**2640 Mortsel (BE)**

(72) Erfinder:
• **Faust, Raimund-Josef, Dr. Dipl.-Chem.**
  **W-6200 Wiesbaden (DE)**
• **Lutz, Silvia**
  **W-6500 Mainz-Mombach (DE)**
• **Pliefke, Engelbert, Dr. Dipl.-Chem.**
  **W-6200 Wiesbaden (DE)**

(56) Entgegenhaltungen:
**DE-A- 3 047 688**     **GB-A- 2 026 517**

**Beschreibung**

Die Erfindung betrifft Offsetdruckplatten aus einem Aluminiumträgermaterial und einer lichtempfindlichen Schicht.

Zur Herstellung von Offsetdruckplatten werden geeignete Schichtträger ein- oder beidseitig mit einer lichtempfindlichen Schicht (Kopierschicht) versehen, mit deren Hilfe ein druckendes Bild auf photomechanischem Wege erzeugt wird. Nach Herstellung des druckenden Bildes trägt der Schichtträger die druckenden Bildstellen und bildet zugleich an den bildfreien Stellen (Nichtbildstellen) den hydrophilen Bilduntergrund für den lithographischen Druckvorgang.

Ein zur Herstellung von lithographischen Platten geeigneter Schichtträger für lichtempfindliche Schichten muß daher folgenden Anforderungen genügen:

-   Die nach der Belichtung relativ gut löslichen Teile der auf den Schichtträger aufgebrachten lichtempfindlichen Schicht müssen sich zur Erzeugung der Nichtbildstellen in einem Entwicklungsprozeß leicht und rückstandsfrei vom Träger ablösen lassen.

-   Der an den Nichtbildstellen freigelegte Träger muß stark hydrophil sein, d.h. eine hohe Affinität zu Wasser besitzen, damit er beim lithographischen Druckvorgang schnell Wasser aufnehmen und dauerhaft halten kann und damit die fette Druckfarbe ausreichend abstößt.

-   Die lichtempfindliche Schicht muß ausreichend fest an dem Schichtträger haften; auch die nach dem Belichten und Entwickeln verbliebenen druckenden Teile der Schicht müssen noch fest genug mit dem Träger verbunden sein um eine hohe Druckauflage zu erzielen.

Als Ausgangsmaterial für derartige Schichtträger können Aluminium-, Stahl-, Kupfer-, Messing- oder Zink-, aber auch Kunststoff-Folien oder Papier verwendet werden. Diese Rohmaterialien werden durch geeignete Behandlung ihrer Oberfläche, wie Körnung, Mattverchromung, oberflächliche Oxidation und/oder Aufbringen einer Zwischenschicht, zu Schichtträgern für Offsetdruckplatten. Aluminium, das heute wohl am häufigsten verwendete Basismaterial für Offsetdruckplatten, wird nach bekannten Methoden wie Trockenbürstung, Naßbürstung, Sandstrahlen, chemische und/oder elektrochemische Behandlung oder eine Kombination hiervon oberflächlich aufgerauht. Zur Steigerung der Abriebfestigkeit kann das so aufgerauhte Aluminium noch einer anodischen Oxidation zum Aufbau einer dünnen Oxidschicht unterworfen werden.

In der Praxis werden die Trägermaterialien, insbesondere anodisch oxidierte Trägermaterialien auf der Basis von Aluminium, oftmals zur Verbesserung der Schichthaftung, zur Steigerung der Hydrophilie und/oder zur Erleichterung der Entwickelbarkeit der lichtempfindlichen Schichten vor dem Aufbringen einer lichtempfindlichen Schicht einem weiteren Behandlungsschritt unterzogen, dazu zählen beispielsweise die folgenden Methoden: In der DE-C 907 147 (= US-A 2,714,066), der DE-B 14 71 707 (= US-A 3,181,461 und US-A 3,280,734) oder der DE-A 25 32 769 (= US-A 3,902,976) werden Verfahren zur Hydrophilierung von Druckplattenträgermaterialien auf der Basis von gegebenenfalls anodisch oxidiertem Aluminium beschrieben, in denen diese Materialien ohne oder mit Einsatz von elektrischem Strom mit wäßriger Natriumsilikat-Lösung behandelt werden.

Aus der DE-A 11 34 093 (= US-A 3,276,868) und der DE-C 16 21 478 (= US-A 4,153,461) ist es bekannt, Polyvinylphosphonsäure oder Mischpolymerisate auf der Basis von Vinylphosphonsäure, Acrylsäure und Vinylacetat zur Hydrophilierung von Druckplattenträgermaterialien auf der Basis von gegebenenfalls anodisch oxidiertem Aluminium einzusetzen. Es wird auch der Einsatz von Salzen dieser Verbindungen erwähnt, aber nicht näher spezifiziert.

Der Einsatz komplexer Fluoride des Titans, Zirkons oder Hafniums gemäß der DE-B 13 00 415 (= US-A 3,440,050) führt ebenfalls zu einer zusätzlichen Hydrophilierung von Aluminiumoxidschichten auf Druckplattenträgermaterialien.

Neben diesen besonders bekanntgewordenen Hydrophilierungsmethoden ist beispielsweise auch noch der Einsatz folgender Polymere auf diesem Anwendungsgebiet beschrieben worden:

In der DE-B 10 56 931 wird der Einsatz von wasserlöslichen, linearen Mischpolymeren auf der Basis von Alkylvinylethern und Maleinsäureanhydriden in lichtempfindlichen Schichten für Druckplatten beschrieben. Daneben werden auch solche Mischpolymere genannt, bei denen die Maleinsäureanhydridkomponente teilweise oder vollständig mit Ammoniak, einem Alkalihydroxid oder einem Alkohol zur Reaktion gebracht wurde.

Aus der DE-B 10 91 433 ist die Hydrophilierung von Druckplattenträgermaterialien auf der Basis von Metallen mit filmbildenden organischen Polymeren, wie Polymethacrylsäure oder Natriumcarboxymethylcellulose oder - hydroxyethylcellulose bei Aluminiumträgern oder einem Mischpolymeren aus Methylvinylether und Maleinsäureanhydrid bei Magnesiumträgern, bekannt.

Gemäß der DE-B 11 73 917 (= GB-A 907,719) werden zur Hydrophilierung von Druckplattenträgermaterialien aus Metallen wasserlösliche polyfunktionelle Amino-Harnstoff-Aldehyd-Kunstharze oder sulfonierte Harnstoff-Aldehyd-Kunstharze verwendet, die auf dem Metallträger in einen wasserunlöslichen Zustand ausgehärtet werden.

Zur Herstellung einer hydrophilen Schicht auf Druckplattenträgermaterialien werden gemäß der DE-B 12 00 847 (= US-A 3,232,783) auf dem Träger nacheinander a) eine wäßrige Dispersion eines modifizierten Harnstoff-Formaldehyd-Harzes, eines alkylierten Methylol-Melamin-Harzes oder eines Melamin-Formaldehyd-Polyalkylenpolyamin-Harzes, und b) eine wäßrige Dispersion einer Polyhydroxy- oder Polycarboxyverbindung, wie Natriumcarboxymethylcellulose aufgebracht, und anschließend wird die so überzogene Unterlage c) mit einer wäßrigen Lösung eines Zr-, Hf-, Ti oder Th-Salzes behandelt.

In der DE-B 12 57 170 (= US-A 2,991,204) wird ein Mischpolymer als Hydrophilierungsmittel für Druckplattenträgermaterialien beschrieben, das neben Acrylsäure-, Acrylat-, Acrylamid- oder Methacrylamid-Einheiten noch Si-trisubstituierte Vinylsilan-Einheiten enthält.

Aus der DE-A 14 71 706 (= US-A 3,298,852) ist der Einsatz von Polyacrylsäure als Hydrophilierungsmittel für Druckplattenträgermaterialien aus Aluminium, Kupfer oder Zink bekannt.

Gemäß der DE-C 21 07 901 (= US-A 3,733,200) wird die hydrophile Schicht auf einem Druckplattenträgermaterial aus einem wasserunlöslichen hydrophilen Acrylat- oder Methacrylat-Homopolymeren oder -Copolymeren mit einer Wasserabsorption von mindestens 20 Gew% gebildet.

In der DE-B 23 05 231 (= GB-A 1,414,575) wird eine Hydrophilierung von Druckplattenträgermaterialien beschrieben, bei der auf den Träger eine Lösung oder Dispersion eines Gemisches aus einem Aldehyd und einem synthetischen Polyacrylamid aufgebracht wird.

Aus der DE-A 23 08 196 (= US-A 3,861,917) ist eine Hydrophilierung von aufgerauhten und anodisch oxidierten Aluminium-Druckplattenträgern mit Ethylen-Maleinsäureanhydrid-Copolymeren oder Methylvinylether-Maleinsäureanhydrid-Copolymeren, mit Polyacrylsäure, Carboxymethylcellulose, Natrium-poly(vinylbenzol-2,4-disulfonsäure) oder Polyacrylamid bekannt.

In der DE-B 23 64 177 (= US-A 3,860,426) wird eine hydrophile Haftschicht für Aluminium-Offsetdruckplatten beschrieben, die zwischen der anodisch oxidierten Oberfläche des Druckplattenträgers und der lichtempfindlichen Schicht angeordnet ist und neben einem Celluloseether noch ein wasserlösliches Zn-, Ca-, Mg-, Ba-, Sr-, Co- oder Mn-Salz enthält. Das Schichtgewicht der hydrophilen Haftschicht an Celluloseether beträgt 0,2 bis 1,1 mg/dm$^2$, ein gleiches Schichtgewicht wird auch für die wasserlöslichen Salze angegeben. Das Gemisch aus Celluloseether und Salz wird in wäßriger Lösung, gegebenenfalls unter Zusatz eines organischen Lösemittels und/oder eines Tensids, auf den Träger aufgetragen.

Gemäß der US-A 3,672,966 werden anodisch oxidierte Aluminiumoberflächen vor oder während der Versiegelung mit heißem Wasser zur Vermeidung von Sealbelägen mit wäßrigen Lösungen von Acrylsäure, Polyacrylsäure, Polymethacrylsäure, Polymaleinsäure oder Copolymeren von Maleinsäure mit Ethylen oder Vinylalkohol behandelt.

Gemäß der US-A 4,049,746 enthalten Hydrophilierungsmittel für Druckplattenträgermaterialien salzartige Reaktionsprodukte aus wasserlöslichen Polyacrylharzen mit Carboxylgruppen und Polyalkylenimin-Harnstoff-Aldehyd-Harzen.

In der GB-A 1,246,696 werden als Hydrophilierungsmittel für anodisch oxidierte Aluminium-Druckplattenträger hydrophile Kolloide, wie Hydroxyethylcellulose, Polyacrylamid, Polyethylenoxid, Polyvinylpyrrolidon, Stärke oder Gummi arabicum, beschrieben.

Die EP-B 0 149 490 beschreibt zur Hydrophilierung Verbindungen, die neben Aminogruppen zusätzlich Carboxyl- bzw. Carboxylatgruppen, Sulfogruppen oder Hydroxylgruppen enthalten. Diese Verbindungen haben ein Molekulargewicht von höchstens 1000.

Aus dem Stand der Technik ist auch der Einsatz von Metallkomplexen, die niedermolekulare Liganden aufweisen, zur Hydrophilierung von Druckplattenträgermaterialien bekannt. Solche Komplexe sind beispielsweise:

- Komplexionen aus zwei- oder mehrwertigen Metallkationen und Liganden, wie Ammoniak, Wasser, Ethylendiamin, Stickstoffoxid, Harnstoff oder Ethylendiamintetraacetat (DE-A 28 07 396 = US-A 4,208,212),
- Eisencyanid-Komplexe wie $K_4(Fe(CN)_6)$ oder $Na_3(Fe(CN)_6)$ in Anwesenheit von Heteropolysäuren, wie Phosphormolybdänsäure oder ihren Salzen und von Phosphaten (US-A 3,769,043),
- Eisencyanid-Komplexe in Anwesenheit von Phosphaten und Komplexbildnern wie Ethylendiamintetraessigsäure für elektrophotographische Druckplatten mit Zinkoxidoberfläche (US-A 3,672,885).

In der EP-A 0 069 320 (= US-A 4,427,765) ist ein Verfahren beschrieben, in dem Salze von Polyvinylphosphonsäuren, Polyvinylsulfonsäuren, Polyvinylmethylphosphonsäuren und anderen Polyvinylverbindungen als Nachbehandlungsmittel eingesetzt werden.

In der DE-A 26 15 075 (= GB-A 1,495,895) wird ein Verfahren zur Behandlung bildtragender Offsetdruckplatten mit Polyacrylamid oder einer Mischung von Polyacrylamid und Polyacrylsäure benutzt.

In der SU-A 647 142 wird ein Copolymer aus Acrylamid und Vinyl-Monomeren zur Hydrophilierung von Offsetdruckplatten eingesetzt.

Die DE-C 10 91 433 beschreibt ein Verfahren zur Nachbehandlung von Offsetdruckplattenträgern mit Polymeren von Methacrylsäure, Methylvinylether und Maleinsäureanhydrid.

Acrylamid zur Behandlung von Druckplattenträgern wird auch in der DE-A 25 40 561 erwähnt.

Zum gleichen Zweck, insbesondere zur Verbesserung der Lagerfähigkeit von Druckplatten, beschreibt die DE-A 29 47 708 u.a. Ni-Salzlösungen von Acrylamid und Acrylsäure sowie Acrylamid und Vinylpyrrolidon.

All die oben beschriebenen Methoden sind jedoch mit mehr oder weniger großen Nachteilen behaftet, so daß die so hergestellten Trägermaterialien oft nicht mehr den heutigen Erfordernissen des Offsetdrucks hinsichtlich Entwicklerfestigkeit, Wasserführung, Freilaufverhalten und Auflagebeständigkeit genügen:

- So muß nach der Behandlung mit Alkalisilikaten, die zu guter Entwickelbarkeit und Hydrophilie führen, eine gewisse Verschlechterung der Lagerfähigkeit von darauf aufgebrachten lichtempfindlichen Schichten hingenommen werden, und die Auflage einer so nachbehandelten Druckplatte sinkt drastisch.

- Die Komplexe der Übergangsmetalle begünstigen zwar prinzipiell die Hydrophilie von anodisch oxidierten Aluminiumoberflächen, sie haben jedoch den Nachteil, sehr leicht in Wasser löslich zu sein, so daß sie beim Entwickeln der Schicht mit wäßrigen Entwicklersystemen, die neuerdings in zunehmendem Maße Tenside und/oder Chelatbildner enthalten, die eine große Affinität zu diesen Metallen besitzen, leicht entfernt werden können. Dadurch wird die Konzentration der Übergangsmetallkomplexe auf der Oberfläche mehr oder weniger stark reduziert, was zu einer Abschwächung der hydrophilen Wirkung führen kann.

- Bei der Behandlung von Trägern mit wasserlöslichen Polymeren ohne Verankerungsmöglichkeiten führt deren gute Löslichkeit besonders in wäßrig-alkalischen Entwicklern, wie sie überwiegend zum Entwickeln von positiv arbeitenden lichtempfindlichen Schichten verwendet werden, ebenfalls zu deutlicher Abschwächung der hydrophilierenden Wirkung.

- Monomere, hydrophile Verbindungen, wie z.B. in der EP-B 149 490 beschrieben, haben ganz allgemein den Nachteil, daß sie während des Entwicklungs- bzw. Druckprozesses relativ schnell von der freigelegten Nichtbildstellenoberfläche weggewaschen werden und ihre hydrophile Wirkung verlieren, da nicht genügend Verankerungsstellen in der Oberfläche gegeben sind.

- Auch die Kombination eines Gemisches aus einem wasserlöslichen Polymeren, wie einem Celluloseether, und einem wasserlöslichen Metallsalz führt, da die Schichtgewichte und damit die Schichtstärke relativ hoch gewählt werden (siehe DE-B 23 64 177), zu einer verminderten Kopierschichthaftung, die sich beispielsweise darin äußern kann, daß beim Entwickeln Teile der Entwicklerflüssigkeit Bildstellen unterwandern.

Aufgabe der Erfindung ist es, hochpolymere Hydrophilierungsmittel für Trägermaterialien für Offsetdruckplatten zur Verfügung zu stellen, die die lichtempfindlichen Schichten der Offsetdruckplatten in ihrer Lagerfähigkeit nicht negativ beeinträchtigen und die neben einer guten Haftung zur Oberfläche des Aluminiumträgers einerseits und zur lichtempfindlichen Schicht andererseits eine dauerhafte Hydrophilie der Nichtbildstellen der fertig entwickelten Offsetdruckplatte bewirken. Darüber hinaus sollen die erfindungsgemäßen Hydrophilierungsmittel nur schwer von den damit behandelten Trägermaterialien auswaschbar sein.

Im Rahmen dieser Aufgabe sollen auch Bindemittel in wäßrig entschichtbaren lichtempfindlichen Photopolymersystemen zur Verfügung gestellt werden.

Gelöst wird diese Aufgabe durch die Herstellung einer Offsetdruckplatte mit einem Aluminiumträgermaterial und einer lichtempfindlichen Schicht, dadurch gekennzeichnet, daß das Trägermaterial mit einem hydrophilen Copolymer beschichtet ist und/oder daß die lichtempfindliche Schicht das hydrophile Copolymer als Bindemittel enthält, wobei das hydrophile Copolymer aus polymeren Ketten mit einem mittleren Molgewicht von mindestens 1.000 aufgebaut ist, in denen die Monomertypen statistisch verteilt sind, an denen saure und basische Seitengruppen angeordnet sind.

Die Mischpolymere der genannten Art sind nicht nur sehr wirksame Hydrophilierungsmittel, die noch dazu auf einfache Art und Weise herstellbar sind, sie lassen sich auch vorteilhaft als Bindemittel in lichtempfindlichen Schichten einsetzen. Der Grad der Löslichkeit der lichtempfindlichen Schicht kann durch Variation von Art und Anteil der zugrunde liegenden Monomere beliebig variiert und sehr günstig eingestellt werden.

Die Konzentration der hydrophilen Gruppen kann so gewählt werden, daß die erfindungsgemäßen Polymere als Bindemittel für lichtempfindliche Schichten mit wäßriger oder wäßrig/alkoholischer Entschichtung geeignet sind; bei noch höherer Konzentration der hydrophilen Gruppen können sie auch als Hydrophilierungsmittel Verwendung finden. Die hydrophilen Polymere zeichnen sich dadurch aus, daß sie entlang einer polymeren Kette saure und basische Seitengruppen aufweisen, die ionisierbar sind und zur Salzbildung befähigt sind.

Die hydrophilen Mischpolymere, die unter anderem als Hydrophilierungsmittel verwendet werden, sind lineare Polymere mit sauren und basischen Seitengruppen und haben folgenden Aufbau:

$$...-(A)_m-...-(B)_n-...-(C)_o-...-(D)_p-...$$

mit m + n + o + p = 100 Mol%.

Die Werte für m und n bewegen sich im Bereich von 2 bis 97 Mol% und haben zueinander entgegengesetzte Verläufe, d.h. einem großen Wert von m steht ein kleiner Wert von n gegenüber und umgekehrt. Vorzugsweise sind jedoch m und n in etwa gleich, d.h. A und B liegen etwa in äquimolarem Verhältnis vor. Für den Wert o ergibt sich ein Bereich von 0 bis 95 Mol% und für p ein Bereich von 1 bis 96 Mol%. Insbesondere liegen die Werte o und p innerhalb der Bereiche 10 bis 50 Mol% bzw. 1 bis 20 Mol%.

Die polymeren Hydrophilierungsmittel sind statistisch aufgebaut und besitzen mittlere Molgewichte von mindestens 1 000, vorzugsweise 5 000 bis 50 000, doch auch Polymere mit noch höherem Molgewicht als 50 000 können mit technischem Vorteil verwendet werden.

Die Monomertypen A, B, C und D sind nachstehend aufgeführt:

**Monomertyp A:** Acrylsäure, Methacrylsäure, Maleinsäure, Fumarsäure, Itaconsäure, Maleinsäuremonoester, Fumarsäuremonoester, Itaconsäuremonoester, Vinylsulfonsäure, Vinylbenzoesäure, Vinylphosphonsäure, und andere säuregruppenhaltige polymerisierbare Monomere.

**Monomertyp B:** Dimethylaminoethyl-acrylat und -methacrylat, Diethylaminoethyl-acrylat und -methacrylat, Dimethylaminopropyl-acrylat und -methacrylat, Dimethylaminobutyl-acrylat und -methacrylat und andere zur Polymerisation geeignete aminogruppenhaltige Monomere. Es sind auch Vinylpyridin, dialkylaminogruppenhaltige Styrole und andere mehr geeignet.

**Monomertyp C:** Acrylsäureester, Methacrylsäureester, Maleinsäure- und Fumarsäureester, Itaconsäureester, Styrol und substituierte Styrole, Vinylchlorid und andere unpolare, nicht hydrophile Monomereinheiten. Die Verwendung des Monomertyps C und dessen Konzentration läßt eine definierte Einstellung der Löslichkeit der Mischpolymeren zu.

**Monomertyp D:** Monomereinheiten, die den hydrophilen Charakter des Monomertyps A verstärken können bzw. mit dem Monomertyp A Chelate bilden können, sind z.B. hydroxylgruppenhaltige Acrylate des Typs Hydroxyethylacrylat bzw. Polyethylenglykolmonoacrylat oder Polypropylenglykolmonoacrylat bzw. die entsprechenden Monomethacrylate.

Die Synthese der Hydrophilierungsmittel erfolgt vorteilhaft durch eine radikalisch initiierte Polymerisation in organischen Lösungsmitteln.

Als radikalische Initiatoren können die üblichen Verbindungen verwendet werden, wie Peroxide, z.B. Benzoylperoxid oder Azoverbindungen, wie Azobisisobutyronitril (AIBN). Zusätzlich können Regler zur Einstellung des Molekulargewichts verwendet werden. Die Polymerisation in unpolaren Lösungsmitteln - als Fällungspolymerisation ausgeführt - hat den Vorteil, daß niedermolekulare, oligomere und chemisch uneinheitliche Anteile, z.B. Produkte, die nur wenig ionisierbare Gruppen enthalten, in Lösung bleiben und damit leicht von den ausgefallenen Polymeren abgetrennt werden können. Diese Polymerisationsart hat weiterhin den Vorteil der Einfachheit und der Wirtschaftlichkeit. Die Fällungspolymerisation in organischen Lösungsmitteln, wie beispielsweise in Benzinfraktionen im geeigneten Siedepunktbereich von 100 bis 140 °C ist sehr leicht und mit guter Ausbeute für Mischpolymere durchführbar, in denen die ionisierbaren Monomereinheiten des Typs A und B in den bevorzugt angewandten Konzentrationen von m ≈ n = 10 bis 50 Mol% vorliegen. Bei Konzentrationen im Bereich m und n = 2 bis 10 Mol% werden die Polymere durch Abdestillieren des organischen Lösungsmittels isoliert. Die folgenden Beispiele erläutern die grundsätzliche Polymerisationsmethode für einige bevorzugte Mischpolymere, die Erfindung ist jedoch nicht auf die angeführten Beispiele beschränkt.

**Beispiel 1**

Es wird ein Mischpolymer aus Methacrylsäure, Dimethylaminoethylmethacrylat, Ethylacrylat und einem pro Mol mit 4,5 Mol Ethylenoxid kettenverlängerten Hydroxyethylmethacrylat hergestellt. Hierzu werden

| | |
|---|---|
| 524 g | Dimethylaminoethylmethacrylat |
| 300 g | Ethylacrylat |
| 287 g | Methacrylsäure und |
| 34 g | Hydroxyethylmethacrylat, das pro Mol mit 4,5 Mol Ethylenoxid kettenverlängernd umgesetzt wurde, in |
| 1145 g | Methylethylketon (MEK) gelöst. |

In einem Dreihalskolben, der mit Rührer, Rückflußkühler, Tropftrichter mit Druckausgleichsrohr sowie Gaseinleitungsrohr versehen ist, werden 1145 g Methylethylketon, 20 Gew% der oben beschriebenen Monomerenlösung und 1 Gew% Azobisisobutyronitril (AIBN), bezogen auf das Gesamtgewicht der Monomeren, unter einer Stickstoff-Schutzgas-atmosphäre vorgelegt und 1 Stunde polymerisiert. Mit einem Tropftrichter wird die restliche Monomermischung dann innerhalb einer Stunde zugegeben und das Ganze weitere 2 h unter Rückfluß polymerisiert. Sodann werden weitere 0,5 Gew% Azobisisobutyronitril hinzugegeben und 2 h unter Rückfluß polymerisiert. Die Aufarbeitung erfolgt durch Absaugen des gebildeten Niederschlags und dreimaliges Waschen des Niederschlags mit je 500 ml Methylethylketon.

Das Produkt wird bei 70 °C getrocknet. Ausbeute: 78 % Das Mischpolymer hat hervorragende Hydrophilierungseigenschaften für Aluminiumträger. Es ist in einer wäßrigen 2n $Na_2CO_3$-Lösung klar löslich.

Völlig analog zu der in Beispiel 1 beschriebenen Polymerisationsmethode können die in der nachstehenden Tabelle angeführten Mischpolymere (Beispiel 2 und 3) hergestellt werden.

| | Beispiel 2 | Beispiel 3 |
|---|---|---|
| Monomer A | Methacrylsäure 30 Mol% | Vinylphosphonsäure 20 Mol% |
| Monomer B | DMAEMA[1] 30 Mol% | DMAEMA[1] 20 Mol% |
| Monomer C | Ethylacrylat 30 Mol% | Ethylacrylat 50 Mol% |
| Monomer D | Veresterungsprodukt aus PEG (350)[2] Monomethylether mit Methacrylsäure 10 Mol% | Veresterungsprodukt aus PEG (350)[2] Monomethylether m.Methacrylsäure 10 Mol % |
| Lösemittel | MEK 67 Gew.-Teile | MEK 67 Gew.-Teile |
| AIBN | 1,5 Gew.-% bezogen auf Monomer | 1,5 Gew.-% = |
| Ausbeute | 92 Gew.-% | 90 Gew.-% |

1) DMAEM = Dimethylaminoethylmethacrylat

2) PEG (350) = Polyethylenglykol vom Molgewicht 350

## Patentansprüche

1. Offsetdruckplatte mit einem Aluminiumträgermaterial und einer lichtempfindlichen Schicht, **dadurch gekennzeichnet, daß** das Trägermaterial mit einem hydrophilen Copolymer beschichtet ist und/oder daß die lichtempfindliche Schicht das hydrophile Copolymer als Bindemittel enthält, wobei das hydrophile Copolymer aus polymeren Ketten mit einem mittleren Molgewicht von mindestens 1.000 aufgebaut ist, in denen die Monomertypen statistisch verteilt sind, an denen saure und basische Seitengruppen angeordnet sind, und der folgenden allgemeinen Struktur entspricht:

$$...-(A)_m-...-(B)_n-...-(C)_o-...-(D)_p-...$$

worin

A: Monomertypen mit sauren Gruppen,
B: Monomertypen mit basischen Gruppen,
C: Monomertypen mit unpolaren, nicht hydrophilen Seitengruppen und
D: Monomertypen, die den hydrophilen Charakter des Monomertyps A verstärken bzw. damit chelatbildend sind,

bedeuten, mit der Maßgabe, daß die Summe m + n + o + p = 100 Mol% ergibt, m und n jeweils $\geq$ 2 Mol% sind, o 0 bis 95 Mol% und p $\geq$ 1 Mol% ist.

2. Offsetdruckplatte nach Anspruch 1, **dadurch gekennzeichnet, daß** der Monomertyp A Acrylsäure, Methacrylsäure, Maleinsäure, Fumarsäure, Itaconsäure, Maleinsäuremonoester, Fumarsäuremonoester, Itaconsäuremonoester, Vinylsulfonsäure, Vinylbenzoesäure oder Vinylphosphonsäure ist.

3. Offsetdruckplatte nach Anspruch 1, **dadurch gekennzeichnet, daß** der Monomertyp B Seitengruppen mit tertiären Aminogruppen enthält, wobei Dialkylamino-substituiertes Styrol, Vinylpyridin, Dimethylaminoethyl-acrylat und -methacrylat, Diethylaminoethyl-acrylat und -methacrylat, Dimethylaminopropyl-acrylat und -methacrylat sowie Dimethylaminobutylacrylat und -methacrylat bevorzugt sind.

4. Offsetdruckplatte nach Anspruch 1, **dadurch gekennzeichnet, daß** der Monomertyp C ein Acrylsäureester oder Methacrylsäureester von aliphatischen Alkoholen mit 1 bis maximal 17 C Atomen, Styrol oder ein alkylsubstituiertes Styrol, Vinylchlorid, Maleinsäureester, Fumarsäureester oder Itaconsäureester, bevorzugt Methylacrylat, Methylmethacrylat, Ethylacrylat oder Ethylmethacrylat, ist.

5. Offsetdruckplatte nach Anspruch 1, **dadurch gekennzeichnet, daß** die sauren seitengruppenhaltigen Monomeren des Typs A zu m = 2 bis 97 Mol% und gleichzeitig die basischen seitengruppenhaltigen Monomeren des Typs B zu n = 97 bis 2 Mol% enthalten sind.

6. Offsetdruckplatte nach Anspruch 1, **dadurch gekennzeichnet, daß** die Monomertypen A und B etwa in äquimolarem Verhältnis stehen, wobei ein Anteil von jeweils 10 bis 50 Mol% bevorzugt ist.

7. Offsetdruckplatte nach Anspruch 1, **dadurch gekennzeichnet, daß** der Monomertyp D ein hydroxylgruppenhaltiges Acrylat vom Typ Hydroxyethylacrylat, Polyethylenglykolmonoacrylat, Polypropylenglykolmonoacrylat oder ein entsprechendes Monomethacrylat ist.

8. Offsetdruckplatte nach Anspruch 1, **dadurch gekennzeichnet, daß** die unpolaren, nichthydrophilen Monomeren des Typs C mit einem Anteil (o) von 2 bis 95 Mol%, vorzugsweise von 10 bis 50 Mol% enthalten sind.

9. Offsetdruckplatte nach Anspruch 1, **dadurch gekennzeichnet, daß** der Monomertyp D in einem Anteil (p) von 1 bis 96 Mol%, vorzugsweise von 1 bis 20 Mol% enthalten ist.

10. Offsetdruckplatte nach einem der Ansprüche 1 bis 9, **dadurch gekennzeichnet, daß** die Copolymere ein mittleres Molgewicht von 5 000 bis 50 000 aufweisen.

## Claims

1. Offset printing plate having an aluminium support material and a light-sensitive layer, **characterized in that** the support material is coated with a hydrophilic copolymer and/or the light-sensitive layer contains said hydrophilic copolymer as a binder, the hydrophilic copolymer being built up from polymeric chains with an average molecular weight of at least 1000, in which the monomer types are distributed statistically, to which acid and basic side groups are attached, and corresponding to the following general structure:

$$...-(A)_m-...-(B)_n-...-(C)_o-...-(D)_p-...$$

in which

A: represents monomer types with acid groups,
B: represents monomer types with basic groups,
C: represents monomer types with non-polar, non-hydrophilic side groupes and
D: represents monomer types which are able to boost the hydrophilic character of monomer type A and/or form chelates with monomer type A,

under the proviso that the sum $m + n + o + p = 100$ mol %, m and n are each $\geq 2$ mol %, o is 0 up to 95 mol % and p is $\geq 1$ mol %.

2. Offset printing plate according to claim 1, **characterized in that** said monomer type A is acrylic acid, methacrylic acid, maleic acid, fumaric acid, itaconic acid, maleic acid monoester, fumaric acid monoester, itaconic acid monoester, vinylsulfonic acid, vinylbenzoic acid or vinylphosphonic acid.

3. Offset printing plate according to claim 1, **characterized in that** said monomer type B contains side groups with tertiary amino groups, with dialkylamino-substituted styrene, vinylpyridine, dimethylaminoethyl acrylate and methacrylate, diethylaminoethyl acrylate and methacrylate, dimethylaminopropyl acrylate and methacrylate as well as dimethylaminobutyl acrylate and methacrylate being preferred.

4. Offset printing plate according to claim 1, **characterized in that** said monomer type C is an acrylic acid ester or methacrylic acid ester from aliphatic alcohols with 1 to at most 17 C atoms, styrene or an alkyl-substituted styrene, vinyl chloride, maleic acid ester, fumaric acid ester or itaconic acid ester, preferably methyl acrylate, methyl methacrylate, ethyl acrylate oder ethyl methacrylate.

5. Offset printing plate according to claim 1, **characterized in that** the acid monomers of type A containing side groups are present in a quantity of m = 2 to 97 mol % and simultaneously the basic monomers containing side groups of type B are present in a quantity of n = 97 to 2 mol %

6. Offset printing plate according to claim 1, **characterized in that** the monomer types A and B are in an approximately equimolar ratio wherein a quantity of 10 to 50 mol % each is preferred.

7. Offset printing plate according to claim 1, **characterized in that** the monomer type D is an acrylate containing hydroxyl groups of the type of hydroxyethyl acrylate, polyethyleneglycol monoacrylate, polypropyleneglycol monoacrylate or a corresponding monomethacrylate.

8. Offset printing plate according to claim 1, **characterized in that** the non-polar, non-hydrophilic monomers of type C are present in a quantity (o) from 2 to 95 mol %, preferably from 10 to 50 mol %

9. Offset printing plate according to claim 1, **characterized in that** the monomer type D is present in a quantity (p) from 1 to 96 mol %, preferably from 1 to 20 mol %.

10. Offset printing plate according to any of claims 1 to 9, **characterized in that** the copolymers have an average molecular weight from 5,000 to 50,000.

**Revendications**

1. Plaque d'impression offset avec un matériau de support en aluminium et une couche photosensible, **caractérisé en ce que** le matériau de support est enduit d'un copolymère hycrophile et/ou que la couche photosensible contient ledit copolymère hydrophile comme liant, le copolymère hydrophile étant composé de chaînes polymères possédant un poids moléculaire moyen d'au moins 1.000 dans lesquelles les types monomères sont distribués statistiquement, auxquelles sont attachés des groupes latéraux acides et alcalins et qui correspond à la structure générale ci-desssous:

$$...\text{-}(A)_m\text{-}...\text{-}(B)_n\text{-}...\text{-}(C)_o\text{-}...\text{-}(D)_p\text{-}...$$

dans laquelle

A: représente des types monomères avec des groupes acides,
B: représente des types monomères avec des groupes alcalins,
C: représente des types monomères avec des groupes latéraux non-polaires, non hydrophiles et
D: représente des types monomères qui renforcent le caractère hydrophile du type monomère A et/ou qui forment des chélates avec le type monomère A,

à condition que la somme m + n + o + p = 100 mol %, m et n soient chacun $\geq$ 2 mol-%, o soit de 0 à 95 mol-% et p soit $\geq$ 1 mol-%.

2. Plaque d'impression offset selon la revendication 1, **caractérisé en ce que** le type monomère A est un acide acrylique, un acide méthacrylique, un acide maléique, un acide fumarique, un acide itaconique, un monoester de l'acide maléique, un monoester de l'acide fumarique, un monoester de l'acide itaconique, un acide vinylsulfonique, un acide vinylbenzoïque, ou un acide vinylphosphonique.

3. Plaque d'impression offset selon la revendication 1, **caractérisé en ce que** le type monomère B contient des groupes latéraux renfermant des groupes amino tertiaires, avec une préférence pour le styrène substitué par un groupe dialkylamino, la vinylpyridine, l'acrylate de diméthylaminoéthyle et le méthacrylate de diméthylaminoéthyle, l'acrylate de diéthylaminoéthyle et le méthacrylate de diéthylaminoéthyle, l'acrylate de diméthylaminopropyle et le méthacrylate de diméthylaminopropyle ainsi que l'acrylate de diméthylaminobutyle et le méthacrylate de diméthylaminobutyle.

4. Plaque d'impression offset selon la revendication 1, **caractérisé en ce que** le type monomère C est un ester d'acide acrylique ou un ester d'acide méthacrylique d'alcools aliphatiques avec 1 à maximum 17 atomes de carbone, le styrène ou un styrène substitué par un groupe alkyle, le chlorure de vinyle, l'ester d'acide maléique, l'ester d'acide fumarique ou l'ester d'acide itaconique, de préférence l'acrylate de méthyle, le méthacrylate de méthyle, l'acrylate d'éthyle ou le méthacrylate d'éthyle.

5. Plaque d'impression offset selon la revendication 1, **caractérisé en ce que** les monomères acides du type A contenant des groupes latéraux sont présents dans une quantité m = 2 à 97 mol-% et en même temps les monomères alcalins du type B contenant des groupes latéraux sont présents dans une quantité n = 97 à 2 mol-%

6. Plaque d'impression offset selon la revendication 1, **caractérisé en ce que** les types monomères A et B se trouvent dans un rapport à peu près équimolaire, une quantité de 10 à 50 mol-% chacun étant préféré.

7. Plaque d'impression offset selon la revendication 1, **caractérisé en ce que** le type monomère D est un acrylate contenant des groupes hydroxyle du type acrylate d'hydroxyéthyle, monoacrylate de polyéthylèneglycol, monoacrylate de polypropylèneglycol ou un monométhacrylate correspondant.

8. Plaque d'impression offset selon la revendication 1, **caractérisé en ce que** les monomères non-polaires, nonhydrophiles du type C sont présents dans une quantité (o) de 2 à 95 mol-%, préférablement de 10 à 50 mol-%

9. Plaque d'impression offset selon la revendication 1, **caractérisé en ce que** le type monomère D est présent dans une quantité (p) de 1 à 96 mol-%, préférablement de 1 à 20 mol-%.

10. Plaque d'impression offset selon l'une quelconque des revendications 1 à 9, **caractérisé en ce que** les copolymères ont un poids moléculaire moyen de 5.000 à 50.000.